# Europäisches Patentamt

# European Patent Office

# Office européen des brevets

(19)

(11) Veröffentlichungsnummer: **0 166 715**
A2

(12) # EUROPÄISCHE PATENTANMELDUNG

(21) Anmeldenummer: **85890119.2**

(22) Anmeldetag: **28.05.85**

(51) Int. Cl.⁴: **B 01 D 37/00,** B 01 D 25/12,
B 01 D 35/18

(30) Priorität: **28.05.84 AT 1762/84**

(43) Veröffentlichungstag der Anmeldung: **02.01.86**
**Patentblatt 86/1**

(84) Benannte Vertragsstaaten: **CH DE FR IT LI SE**

(71) Anmelder: **VOEST-ALPINE Aktiengesellschaft,**
**Friedrichstrasse 4, A-1011 Wien (AT)**

(72) Erfinder: **Hanke, Reinhart, Dipl.-Ing., Annaberggasse 2,**
**A-8700 Leoben (AT)**
Erfinder: **Jahn, Kornel, Dipl.-Ing., Seisgasse 14,**
**A-1040 Wien (AT)**
Erfinder: **Scherb, Gustav, Dipl.-Ing., Hillerstrasse 10,**
**A-4020 Linz (AT)**

(74) Vertreter: **Kretschmer, Adolf, Dipl.-Ing. et al,**
**Patentanwälte Dipl.Ing. A. Kretschmer Dr. Thomas M.**
**Haffner Schottengasse 3a, A-1014 Wien (AT)**

(54) **Verfahren zum Entwässern von Schlämmen und/oder organischen Stoffen sowie Vorrichtung zur Durchführung des Verfahrens.**

(57) Zum Entwässern von Schlämmen und/oder organischen Stoffen werden Pressen, beispielsweise Kammerfilterpressen (3) verwendet. Es wird vorgeschlagen, anschliessend an einen ersten Pressvorgang den mechanischen
Pressdruck zurückzunehmen und das Pressgut mit Sattdampf einer Temperatur zwischen 100°C und 200°C zu beaufschlagen, worauf neuerlich mechanisch gepresst wird.
Die Kammerfilterpresse (3) weist zu diesem Zweck neben
den Leitungen (11) für das Beaufschlagen mit Druckmedium
Anschlüsse für Sattdampfleitungen (8) auf.

Verfahren zum Entwässern von Schlämmen und/oder organischen Stoffen sowie Vorrichtung zur Durchführung des Verfahrens

Die Erfindung bezieht sich auf ein Verfahren zum Entwässern von Schlämmen und/oder organischen Stoffen, insbesondere Klärschlamm, unter Anwendung eines Preßdruckes, bei welchem das zu entwässernde Gut nach einem ersten Preßvorgang vom mechanischen Preßdruck entspannt wird, sowie eine Vorrichtung zur Durchführung dieses Verfahrens. Bei derartigen Verfahren ist es bereits bekannt, vor einem Entwässern der Schlämme und/oder organischer Stoffe beispielsweise in Siebbandpressen oder Zentrifugen eine Konditionierung des Schlammes vorzunehmen, bei welcher in der Regel mit Flockungshilfsmitteln und mit Wasserdampf drucklos gearbeitet wird. Das auf diese Weise vorbehandelte Material wird in der Folge gepreßt oder zentrifugiert und kann nachfolgend einer weiteren Entwässerungs- bzw. Trocknungsstufe zugeführt werden.

Aus der EP-PS 57 732 ist bereits ein Verfahren bekanntgeworden, bei welchem zur Entwässerung von Schlämmen Filterpressen eingesetzt wurden, wobei derartige Pressen zyklisch betrieben wurden und zwischen einzelnen Preßvorgängen eine Entspannung vorgenommen wurde. Spezielle Verfahrensweisen bei derartigen zyklischen Pressungen sind auch der DE-OS 30 04 826 und der CH-PS 634 538 zu entnehmen.

Gemäß einem älteren noch nicht veröffentlichten Vorschlag der Anmelderin wurde zur Verbesserung der Entwässerungsleistung bereits vorgeschlagen, gleichzeitig mit einem mechanischen Pressen, beispielsweise unter Verwendung von Filterbandpressen, oder gleichzeitig mit einem Zentrifugieren eine thermische Erhitzung unter Anwendung von Sattdampf vorzunehmen. Durch die Erwärmung während der Anwendung des Preßdruckes wird hiebei vor allen Dingen darauf abgezielt, die Bindungskräfte zwischen den Feststoffen und dem Wasser zu verringern, wobei der Effekt ausgenützt wurde, daß durch die Erhitzung die dynamische Viskosität des Wassers erheblich vermindert wurde.

Die vorliegende Erfindung zielt nun darauf ab, ein besonders vorteilhaftes Verfahren der eingangs genannten Art sowie eine zur Durchführung dieses Verfahrens besonders geeignete Vorrichtung zu schaffen, bei welcher die Abwasserbelastung weiter verringert werden kann und der Bedarf an Waschwasser für die Reinigung der in den Pressen enthaltenen Filter- bzw. Siebflächen verringert wird. Zur Lösung dieser Aufgabe besteht das erfindungsgemäße Verfahren im wesentlichen darin, daß anschließend an die Entspannung vom mechanischen Preßdruck mit Sattdampf einer Temperatur zwischen 100°C und 200°C beaufschlagt wird und anschließend neuerlich unter mechanischen Preßdruck gesetzt wird. Dadurch, daß das zu entwässernde Gut vor dem Beaufschlagen mit Sattdampf zunächst vom mechanischen Preßdruck entlastet wird, erfolgt zunächst aufgrund von elastischen Kräften innerhalb des zu pressenden Materials eine Aufweitung der Struktur, welche den Angriff von Sattdampf erleichtert. Im übrigen werden auch die Preßflächen weitgehend freigegeben, so daß eine größere Angriffsfläche für den Sattdampf zur Verfügung steht.

Vorzugsweise wird vor dem neuerlichen mechanischen Pressen der Dampfdruck entspannt. Auf diese Weise wird erreicht, daß gegebenenfalls kondensierendes Wasser durch die Druckverminderung rasch abgezogen werden kann, so daß kein zusätzlicher Wasserballast eingetragen wird. Dieses rasche Verflüchtigen von dampfförmigen Anteilen aus dem mit Sattdampf behandelten zu entwässernden Gut führt aufgrund der mittlerweile eingetretenen Erwärmung des zu entwässernden Gutes auch zu einem Freiwerden von zusätzlichem Stoffwasser, welches teilweise verdunsten oder aber für die nachfolgende neuerliche Pressung besser ausgetrieben werden kann, da es nunmehr an die Oberfläche des Preßkuchens gelangt. Bei dem nachfolgenden neuerlichen mechanischen Pressen wird dieses mobilisierte Wasser leichter ausgepreßt, so daß ein höherer Trocknungsgrad erzielt werden kann. Die Verwendung von Sattdampf zwischen zwei mechanischen Preßvorgängen hat überraschenderweise zur Folge, daß bei der nachfolgenden Filterreinigung bis zu 50% weniger Waschwasser erforderlich ist.

Im Rahmen des erfindungsgemäßen Verfahrens hat es sich als besonders vorteilhaft herausgestellt, den Preßdruck nach dem Beaufschlagen mit Sattdampf über einen kürzeren Zeitraum aufzubringen als vor dem Beaufschlagen mit Sattdampf.

In besonders vorteilhafter Weise wird das Verfahren so durchgeführt, daß das beim neuerlichen mechanischen Pressen gebildete Filtrat gesondert abgeleitet und weiterbehandelt wird. Auf diese Weise kann der Tatsache Rechnung getragen werden, daß das hier anfallende Filtrat an Schwermetallen angereichert ist und es können die gelösten Schwermetalle gesondert aufgearbeitet werden. Alle Filtrate sind mit gelösten organischen Verbindungen stark angereichert und es werden daher vorzugsweise die mit gelösten organischen Verbindungen angereicherten Filtrate einer Faulanlage zur Gaserzeugung und Dampferzeugung zugeführt.

Die erfindungsgemäße Vorrichtung zur Durchführung dieses Verfahrens ist im wesentlichen gekennzeichnet durch eine Filterpresse, insbesondere Kammerfilterpresse, Membranfilterpresse oder Rahmenfilterpresse, welche in einem druckfest verschließbaren Gehäuse angeordnet ist, an welches abschließbare Leitungen für die Sattdampfzufuhr und die Entspannung angeschlossen sind. Eine derartige Filterpresse erlaubt den Druckabbau vor der Anwendung des Dampfes und kann somit ohne nennenswerte Modifikationen unmittelbar für die erfindungsgemäßen Zwecke eingesetzt werden. Es ist auf diese Weise möglich, die Entwässerung, eine Konditionierung und die Nachentwässerung in der gleichen Einrichtung vorzunehmen. Derartige Filterpressen sind üblicherweise für einen Betriebsdruck von 12 bis 16 bar gebaut und können daher ohne grundsätzliche Änderungen unmittelbar eingesetzt werden. Im Zusammenhang mit der Sattdampfbehandlung ist es möglich, gegenüber Filterbandpressen wesentlich höhere Trockensubstanzgehalte zu erzielen. Kammerfilterpressen zeichnen sich darüberhinaus durch eine hohe Betriebssicherheit aus, da sie wenig bewegte, vom zu entwässernden Gut berührte Teile aufweisen. Gegenüber anderen Entwässerungseinrichtungen, wie beispielsweise Zentrifugen, handelt es sich bei Kammerfilterpressen um baulich relativ einfache Einrichtungen, welche daher auch ohne weiteres höheren Betriebsdrucken und höheren Betriebstemperaturen, insbesondere einer Sattdampfbeaufschlagung, standhalten.

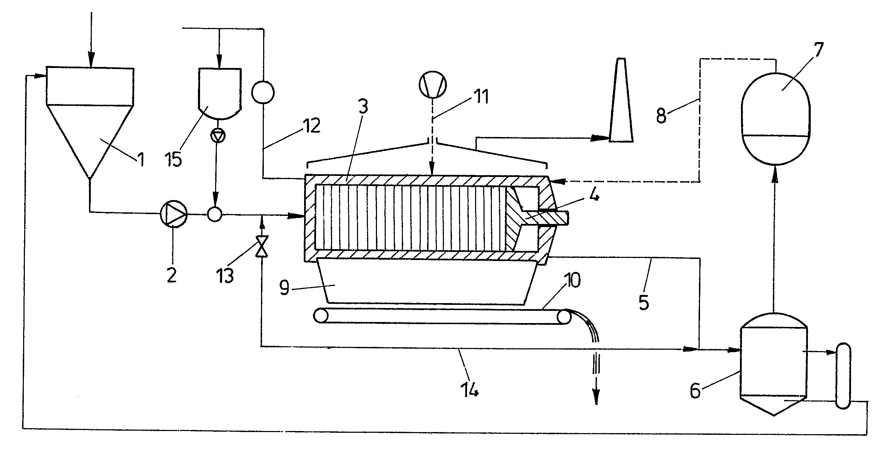

Die Erfindung wird nachfolgend anhand einer in der Zeichnung schematisch dargestellten Ausführungsform der Vorrichtung zur Durchführung des erfindungsgemäßen Verfahrens näher erläutert.

In der Zeichnung ist der Zulauf vom Dünnschlamm schematisch durch eine Aufgabeeinrichtung 1 angedeutet. Über eine Pumpe 2 gelangt der Dünnschlamm in eine Kammerfilterpresse 3, welche einen beweglichen Stempel 4 aufweist. Das Filtrat dieser Kammerfilterpresse wird über eine Leitung 5 abgezogen und gelangt in einen Faulbehälter 6. Aus einer Dampferzeugung 7 wird Dampf über eine Leitung 8 der Kammerfilterpresse 3 zugeführt, wobei der Anschluß in einfacher Weise an den üblicherweise vorgesehenen Anschluß für Waschflüssigkeit oder für Druckluft erfolgen kann. Der ausgetragene Schlamm wird über einen Schlammbunker 9 und einen Förderer 10 als Trockenschlamm ausgeworfen. Zusätzlich kann über eine Leitung 11 Druckluft für den Antrieb der Kammerfilterpresse zugeführt werden. Über eine Leitung 12 kann Spritzwasser für die Reinigung der Klappen bzw. Filter eingebracht werden. Nach dem Einleiten von Dampf über die Leitung 8 kann durch Öffnen des absperrbaren Ventiles 13 eine Entspannung vorgenommen werden, worauf der entspannte kondensierende Dampf über eine Leitung 14 dem Faulbehälter zugeführt wird. Ein Teil des Faulschlammes kann der Aufgabe 1 wiederum rückgeführt werden, wobei dieser Aufgabebunker 1 als Eindicker ausgebildet ist.

Vor der Aufgabe des Dünnschlammes in die Kammerfilterpresse kann noch Flockungsmittel zudosiert werden, wofür ein Vorratsbehälter 15 vorgesehen ist.

Die Anlage wird mit folgenden Arbeitstakten betrieben. Zunächst wird die Kammerfilterpresse gefüllt und eine erste Entwässerung auf etwa 40% Trockensubstanzgehalt vorgenommen. Hierauf wird analog wie beim üblicherweise bei derartigen Kammerfilterpressen vorgesehenen Waschvorgang eine Entspannung vorgenommen und es wird die Kammerfilterpresse 3 mit Sattdampf beaufschlagt. Nach dem neuerlichen Entspannen durch Öffnen des Ventiles 13 erfolgt eine Nachentwässerung unter mechanischer Beaufschlagung der Kammerfilterpresse auf einen Trockensubstanzgehalt von größer als 60 Gew.%. Der ausgetragene Schlammkuchen wird aus dem Schlammbunker 9 anschließend abgezogen und durch die Fördereinrichtung 10 abgeworfen.

Alternativ zu einer derartigen Kammerfilterpresse sind auch andere Filterpressen für die Durchführung des erfindungsgemäßen Verfahrens geeignet. In erster Linie seien hiezu die Rahmenfilterpresse und die Membranfilterpresse genannt. Bei Verwendung einer Rahmenfilterpresse kann Dampf unmittelbar an den Waschflüssigkeitseingang angeschlossen werden, wohingegen bei Membranfilterpressen mit Vorzug der Dampf über die Druckluftleitung eingebracht wird.

Patentansprüche:

1. Verfahren zum Entwässern von Schlämmen und/oder organischen Stoffen, insbesondere Klärschlamm, unter Anwendung eines Preßdruckes, bei welchem das zu entwässernde Gut nach einem ersten Preßvorgang vom mechanischen Preßdruck entspannt wird, dadurch gekennzeichnet, daß anschließend an die Entspannung vom mechanischen Preßdruck mit Sattdampf einer Temperatur zwischen 100°C und 200°C beaufschlagt wird und anschließend neuerlich unter mechanischen Preßdruck gesetzt wird.

2. Verfahren nach Anspruch 1, dadurch gekennzeichnet, daß nach dem Beaufschlagen mit Sattdampf und vor dem neuerlichen mechanischen Pressen der Druck entspannt wird.

3. Verfahren nach Anspruch 1 oder 2, dadurch gekennzeichnet, daß Preßdruck nach dem Beaufschlagen mit Sattdampf über einen kürzeren Zeitraum aufgebracht wird als vor dem Beaufschlagen mit Sattdampf.

4. Verfahren nach einem der Ansprüche 1, 2 oder 3, dadurch gekennzeichnet, daß das beim neuerlichen mechanischen Pressen gebildete Filtrat gesondert abgeleitet und weiterbehandelt wird.

5. Verfahren nach einem der Ansprüche 1 bis 4, dadurch gekennzeichnet, daß die mit gelösten organischen Verbindungen angereicherten Filtrate einer Faulanlage (6) zur Gaserzeugung und Dampferzeugung (7) zugeführt werden.

6. Vorrichtung zur Durchführung des Verfahrens nach einem der Ansprüche 1 bis 5, gekennzeichnet durch eine Filterpresse, insbesondere eine Kammerfilterpresse, eine Membranfilterpresse oder eine Rahmenfilterpresse, welche in einem druckfest verschließbaren Gehäuse angeordnet ist, an welches

- 7 -

abschließbare Leitungen für die Sattdampfzufuhr und die Entspannung angeschlossen sind.

0166715